# EUROPÄISCHE PATENTSCHRIFT

(11) **EP 3 636 116 B1**
(45) Veröffentlichungstag und Bekanntmachung des Hinweises auf die Patenterteilung: **24.03.2021**
(21) Anmeldenummer: 18199676.0
(22) Anmeldetag: 10.10.2018
(51) Int. Cl.: A47J 36/10, A47J 19/02

(54) **BECHER AUS SPRITZGEGOSSENEM KUNSTSTOFF**
CUP MADE FROM INJECTION MOULDED PLASTIC
GOBELET DE MATIÈRE PLASTIQUE MOULÉE PAR INJECTION

(43) Veröffentlichungstag der Anmeldung: 15.04.2020
(73) Patentinhaber: Rotho Kunststoff AG, 5303 Würenlingen (CH)
(72) Erfinder: THOMA, Christian, 79774 Albbruck (DE); BRUNNER, Markus, 5613 Hilfikon (CH); BINDER, Marc, 5333 Baldingen (CH)
(74) Vertreter: Lemcke, Brommer & Partner Patentanwälte Partnerschaft mbB

(56) Entgegenhaltungen:
- GB-A- 191 028 386
- US-A- 3 876 104
- US-A- 4 305 613
- US-A1- 2012 206 995
- US-A1- 2014 042 167
- US-A1- 2017 245 668
- US-B1- 6 554 466

## Beschreibung

Die vorliegende Erfindung betrifft einen Becher aus spritzgegossenem Kunststoff, insbesondere zum Aufbewahren sowie zur Ausgabe von Flüssigkeiten und schüttfähigen Feststoffen, nach dem Oberbegriff des Patentanspruchs 1. Ein solcher Becher ist beispielsweise aus der US 2014/042167 A1 bekannt und umfasst eine im Wesentlichen umlaufende Wandung, einen Becherboden, wobei die Wandung und der Becherboden einen Innenbereich des Bechers definieren, einen dem Becherboden gegenüberliegenden Rand der Wandung sowie einen ein- oder mehrteiligen, auf den Rand aufsetzbaren oder in den Rand einsetzbaren Deckel. An einer Außenseite der Wandung ist weiterhin ein Griff zum Halten des Bechers angeordnet.

Becher dieser Art sind in vielfachen Ausführungen seit langem bekannt. Sie werden beispielsweise als Mess- oder Rührbecher zur Bestimmung von Volumina oder zur Herstellung bzw. zum Anmischen von Teigen oder dergleichen verwendet. Hierfür weisen derartige Becher zunächst eine umlaufende Wandung und einen Becherboden auf, wobei die Wandung und der Becherboden einstückig ausgebildet sind und dadurch einen Bechergrundkörper bilden. Die Wandung und der Becherboden bzw. der Bechergrundkörper definieren einen Innenbereich des Bechers mit einem bestimmten Volumen, in welchen Flüssigkeiten oder auch schüttfähige Feststoffe, wie beispielsweise Mehl, Reis oder dergleichen, eingefüllt werden können. Wird an der Wandung des Bechers eine parallel zur Längsachse des Bechers verlaufende Messskala angebracht und die Wandung aus transparentem Kunststoff hergestellt, so besteht weiterhin die Möglichkeit, das Volumen bzw. das Gewicht der eingefüllten Flüssigkeiten oder der schüttförmigen Feststoffe zu bestimmen.

Derartige Becher können weiterhin einen Deckel aufweisen, welcher entweder auf den Rand der Wandung aufgesetzt oder in den Rand der Wandung eingesetzt wird. Dieser Deckel dient zur zumindest teilweisen Abdeckung einer vom Rand der Wandung gebildeten Becheröffnung.

Möchte ein Benutzer die im Innenbereich des Bechers befindliche Flüssigkeit oder das Schüttgut ausgießen, so kann er den Becher an dem hierfür vorgesehenen Griff ergreifen, welcher an einer Außenseite der Wandung angeordnet ist, und den Becher kippen. Um zu verhindern, dass sich der Deckel beim Ausgießen der Flüssigkeit bzw. beim Kippen des Bechers vom Rand der Wandung löst, muss der Benutzer normalerweise mit seiner zweiten Hand den Deckel halten, so dass dieser nicht vom Rand rutscht bzw. herabfällt.

Der vorliegenden Erfindung liegt daher die Aufgabe zugrunde, einen Becher der eingangs genannten Art durch eine erleichterte Handhabbarkeit zu verbessern. Gelöst ist diese Aufgabe durch einen Becher mit den Merkmalen des Anspruchs 1. Bevorzugte Ausgestaltungen und Weiterbildungen des erfindungsgemäßen Bechers sind in den Ansprüchen 2 bis 15 niedergelegt.

Ein erfindungsgemäßer Becher aus spritzgegossenem Kunststoff, welcher insbesondere für die Aufbewahrung sowie die Ausgabe von Flüssigkeiten und schüttfähigen Feststoffen geeignet ist, weist eine im Wesentlichen umlaufende Wandung, einen Becherboden, einen dem Becherboden gegenüberliegenden Rand der Wandung sowie einen auf den Rand der Wandung aufsetzbaren oder in den Rand der Wandung einsetzbaren Deckel auf, welcher Deckel zumindest einstückig ausgebildet ist. Die Wandung und der Becherboden definieren einen Innenbereich des Bechers, wobei die Wandung und der Becherboden einstückig ausgebildet sind und hierdurch einen einteiligen Bechergrundkörper bilden. Damit dieser Becher von einem Benutzer gehalten werden kann, ist an einer Außenseite der Wandung weiterhin ein Griff angeordnet. Der Rand der Wandung bildet eine Becheröffnung aus bzw. umschließt eine Becheröffnung, durch welche Flüssigkeiten oder schüttfähige Feststoffe in den Innenbereich des Bechers eingefüllt werden können.

Wesentlich bei dem erfindungsgemäßen Becher ist, dass dieser zudem ein als Griffabdeckung ausgebildetes, lösbares Fixierelement aufweist, welches den Deckel im Benutzungszustand im Bereich des Randes lösbar befestigt bzw. fixiert oder zumindest sichert, so dass sich der Deckel nicht unbeabsichtigt von der Becheröffnung lösen kann.

Der Benutzungszustand stellt hierbei einen Zustand dar, in welchem der Becher mit einer Flüssigkeit oder einem Schüttgut befüllt ist und zum Ausgießen der Flüssigkeit oder zum Ausschütten des Schüttguts verwendet wird. In einem Lagerzustand kann der Becher unbefüllt, d.h. leer und/oder gereinigt gelagert werden. Somit stellt der Lagerzustand auch einen unbenutzten Zustand des Bechers dar.

Erfindungsgemäß wird der Deckel zumindest im Benutzungszustand durch das Fixierelement im Bereich des Randes des Bechers gehalten bzw. gesichert. Dadurch kann verhindert werden, dass insbesondere beim Ausgießen einer Flüssigkeit, welche sich im Innenbereich des Bechers befindet, und dem damit verbundenen Kippen bzw. Schrägstellen des Bechers sich der Deckel ungewollt vom Becher ablöst und der Inhalt unkontrolliert verschüttet wird.

Unter dem als Griffabdeckung ausgebildeten Fixierelement wird im Rahmen dieser Erfindung eine teilweise oder vollständige Abdeckung oder Verkleidung des Griffs verstanden, welche durch Auflegen oder Aufsetzen am Griff lösbar befestigt werden kann. Das Fixierelement kann dabei der Form des Griffs im Wesentlichen zumindest teilweise nachgebildet sein.

Bei den aus dem Stand der Technik bekannten Bechern muss ein Benutzer beim Ausgießen der Flüssigkeit nicht nur den Becher am Griff mit einer Hand halten, sondern auch den Deckel mit seiner zweiten Hand sichern, um ein ungewolltes Ablösen des Deckels zu verhindern. Somit bleibt dem Benutzer keine weitere freie Hand, mit der er beispielsweise ein Trinkgefäß, in welches die Flüssigkeit eingeschenkt werden soll, halten kann. Aufgrund dessen ermöglicht das Fixierelement des erfindungsgemäßen Bechers eine gegenüber den aus dem Stand der Technik bekannten Bechern verbesserte Handhabbarkeit.

Da das Fixierelement als Griffabdeckung ausgebildet ist, kann es vom Benutzer mit der Griffhand festgehalten werden, um seine sichernde Funktion zu unterstützen, selbst wenn es für eine leichtere Handhabbarkeit vergleichsweise leicht lösbar am Griff angeordnet wird.

In einer ersten vorteilhaften Ausgestaltung des Bechers weist der Griff einen Verbindungsabschnitt, welcher auf der dem Innenbereich abgewandten Seite des Randes der Wandung angeordnet und einstückig mit dieser verbunden ist, sowie einen Griffabschnitt zum Halten des Bechers auf, in den sich der Verbindungsabschnitt fortsetzt. Das als Griffabdeckung ausgebildete Fixierelement ist hierbei auf den Verbindungsabschnitt aufsetzbar und von diesem abnehmbar.

Es hat sich als vorteilhaft herausgestellt, wenn sich der Griffabschnitt im Wesentlichen parallel zur Wandung des Bechers erstreckt. Hierdurch können der Griff und damit der Becher vom Benutzer in einfacher Weise gehalten werden. Insbesondere jedoch ergibt sich durch diese Ausformung des Griffs eine leichte Herstellbarkeit des Bechers im Spritzgießverfahren, da der Griffabschnitt dann keinerlei Hinterschneidungen ausbildet, die ein Entformen des frisch spritzgegossenen Bechers erschweren würden bzw. ein Formwerkzeug mit Schiebermechanik erfordern würden. Ist der Verbindungsabschnitt, wie erfindungsgemäß bevorzugt, an seiner Oberseite im wesentlichen offen und wird erst nach dem Entformen durch die separate Griffabdeckung verschlossen, wird auch an dieser Stelle keine Hinterschneidung ausgebildet, die für ein einfaches Entformen nachteilig wäre.

Hinzu kommt, dass die erfindungsgemäße, separate Griffabdeckung vorzugsweise erst beim Einzelhändler oder bei einer Benutzung durch den Kunden auf den Verbindungsabschnitt aufgesetzt wird, so dass mehrere erfindungsgemäße Becher für den Transport zum Einzelhandel ineinander genestet werden können. Denn da der Verbindungsabschnitt ohne Griffabdeckung nach oben offen ist, kann der Griffabschnitt eines ersten Bechers in den - im Spritzguss regelmäßig hohl ausgebildeten - Griffabschnitt eines zweiten, darunter stehenden Bechers eingesteckt werden. Wäre der Verbindungsabschnitt des Griffs geschlossen ausgebildet, würde der Griff ein Nesten der Becher verhindern, soweit sie nicht mit völlig kreisrunder Grundfläche gefertigt werden sollen.

Es liegt hierbei im Rahmen der Erfindung, dass sich der Verbindungsabschnitt vorzugweise in etwa senkrecht vom Rand der Wandung weg erstreckt. Besonders bevorzugt schließen der Verbindungsabschnitt und der Griffabschnitt in diesem Fall einen im Wesentlichen rechten Winkel zueinander ein. Die Erfindung ist jedoch nicht hierauf beschränkt.

Das als Griffabdeckung ausgebildete Fixierelement deckt in einer weiteren vorteilhaften Ausgestaltung des Bechers den Verbindungsabschnitt des Griffes im Wesentlichen vollständig ab. Das als Griffabdeckung ausgebildete Fixierelement kann vom Benutzer solcherart gehalten werden, dass dieser den Griffabschnitt des Griffes mit den Fingern umschließt und dabei den Daumen auf das Fixierelement auflegt, welches zuvor auf dem Verbindungsabschnitt angeordnet wurde. Hierdurch kann der Benutzer aktiv verhindern bzw. zusätzlich sicherstellen, dass sich der Deckel beim Ausgießen der Flüssigkeit vom Rand der Wandung löst. Somit kann auf zusätzliche Befestigungsmittel des Fixierelements am Griffabschnitt verzichtet werden, wodurch die Herstellungskosten des Bechers deutlich verringert werden. Auch kann das Fixierelement hierdurch leicht lösbar ausgebildet werden, um beispielsweise den gesicherten Deckel freizugeben.

Besonders bevorzugt kann der Verbindungsabschnitt zusätzlich eine Aufnahme aufweisen, in welche das Fixierelement eingesetzt werden kann. Hierdurch wird eine exakte Positionierung des Fixierelements auf dem Verbindungsabschnitt gewährleistet und ein unerwünschtes Abrutschen des Fixierelements vom Verbindungsabschnitt verhindert.

Zusätzlich zu dieser Aufnahme oder unabhängig davon kann ein unerwünschtes Abrutschen des Fixierelements vom Verbindungsabschnitt dadurch verhindert werden, dass das Fixierelement in einer weiteren vorteilhaften Ausgestaltung des Bechers lösbar auf den Verbindungsabschnitt des Griffes aufclipsbar ist. In diesem Fall muss das Fixierelement nicht vom Daumen des Benutzers am Griff gehalten werden, sondern es wird zusätzlich oder unabhängig davon durch das Aufclipsen am Verbindungsabschnitt lösbar befestigt.

Um die Funktionalität des Bechers insgesamt zu erhöhen, sieht eine weitere vorteilhafte Ausgestaltung des Bechers vor, dass der Deckel einen Adapter sowie zumindest einen ersten Deckeleinsatz umfasst. In dieser vorteilhaften Ausgestaltung ist der erste Deckeleinsatz für den Benutzungszustand des Bechers in den Adapter einsetzbar oder auf den Adapter aufsetzbar, während er im Lagerzustand des Bechers auf den Becherboden auflegbar ist.

Unter dem zuvor genannten Adapter wird im Rahmen dieser Erfindung ein Zusatz- oder Verbindungsteil verstanden, welches im Bereich des Randes der Wandung des erfindungsgemäßen Bechers anordenbar ist und dazu dient, den ersten und vorzugsweise auch jeden weiteren Deckeleinsatz lösbar zu halten, indem dieser Deckeleinsatz in den Adapter eingesetzt oder auf den Adapter aufgesetzt wird. Es liegt hierbei im Rahmen der Erfindung, dass der Becher und der Adapter im Wesentlichen kreisförmig, abgerundet oder eckig ausgebildet sind. Der Adapter kann vorzugsweise als Adapterring ausgebildet sein. Die Erfindung ist jedoch nicht hierauf beschränkt.

Durch ein Auflegen des ersten Deckeleinsatzes auf den Becherboden im Lagerzustand des Bechers kann verhindert werden, dass der Deckeleinsatz, nachdem er vom Adapter abgenommen wurde, bei längerem Nichtbenutzen des Bechers verloren geht. Darüber hinaus können mehrere, verschiedene Deckeleinsätze, gegebenenfalls mit unterschiedlichen Funktionen, vorgesehen sein und im Lagerzustand im Inneren des Bechers aufbewahrt werden.

In einer weiteren vorteilhaften Ausgestaltung des Bechers ist der Adapter im Querschnitt im Wesentlichen U-förmig ausgebildet, weist hierfür einen ersten sowie einen zweiten Schenkel und einen diese Schenkel verbindenden Steg auf, und ist ringförmig als offener oder geschlossener Adapterring gefertigt. Somit umschließt der Adapter eine Öffnung, in oder auf welche Öffnung der erste Deckeleinsatz für den Benutzungszustand des Bechers einsetzbar oder aufsetzbar ist. Wird der erste Deckeleinsatz in die Öffnung des Adapters eingesetzt, so wird dieser Deckeleinsatz von dem Adapter im Wesentlichen rahmenartig umschlossen bzw. gehalten. Die U-förmige Ausgestaltung des Adapters führt zu einer Erhöhung der Stabilität des Adapters.

Es liegt hierbei im Rahmen der Erfindung, dass der Adapter entweder auf den Rand der Wandung aufgesetzt werden kann, indem dieser Rand von den beiden Schenkeln des Adapters umschlossen wird und der Steg des Adapters auf dem Rand aufsitzt, oder in den Bereich des Randes der Wandung eingesetzt wird, wodurch einer der beiden Schenkel im Bereich des Randes der Wandung anliegt. Die beiden Schenkel des Adapters können vorzugsweise entweder eine im Wesentlichen identische oder voneinander unterschiedliche Länge aufweisen.

Der Adapter kann die Becheröffnung zumindest teilweise abdecken. Dadurch kann der Adapter auch als Spritzschutz dienen. Wird beispielsweise eine in den Innenbereich eingebrachte Flüssigkeit mit einem Handrührgerät oder Schneebesen durchmischt, dann werden durch das Handrührgerät gebildete Flüssigkeitsspritzer zumindest teilweise von dem Adapter an einem Austreten aus dem Innenbereich der Wandung gehindert.

Damit der Adapter beim Einsetzen in den Bereich des Randes der Wandung nicht in den Innenbereich des Bechers hineinrutscht, weist der Adapter in einer weiteren vorteilhaften Ausgestaltung des Bechers eine im Wesentlichen außen umlaufende Auskragung auf. Wird der Adapter in den Bereich des Randes der Wandung eingesetzt, dann liegt diese Auskragung vorzugsweise auf dem Rand der Wandung auf, sodass der Adapter im Bereich des Randes gehalten wird. Zwar besteht grundsätzlich die Möglichkeit, die Abmessung des Adapters so zu wählen, dass der Adapter allein durch ein "Einspannen" in den Bereich des Randes am Rand gehalten wird. Da die Elastizität von Kunststoff jedoch im Laufe der Zeit abnimmt und es zu einer, wenn auch nur minimalen Verformung des Spritzgussformteils kommen kann, würde ein reines Einsetzen des Adapters in den Bereich des Randes keinen sicheren Halt im Bereich des Randes der Wandung gewährleisten. Somit ermöglicht die umlaufende Auskragung einen optimalen Sitz des Adapters im Becher auch noch nach jahrelanger Benutzung des Bechers.

In einer weiteren vorteilhaften Ausgestaltung des Bechers ist der Adapter ringförmig ausgebildet und weist einen nach innen auskragenden Rand auf, vorzugsweise an einem inneren, ersten Schenkel des Adapters. Auf diesen auskragenden Rand des ersten Schenkels kann der erste Deckeleinsatz beim Einsetzen in den Adapter aufgesetzt bzw. aufgelegt werden, sodass dieser erste Deckeleinsatz ebenfalls nicht in den Innenbereich des Bechers hineinrutscht, sondern vielmehr vom Adapter gehalten werden kann. Dabei kann die Abmessung des Deckeleinsatzes bevorzugt so gewählt werden, dass dieser aufgrund der Elastizität des Kunststoffes in die Ringöffnung des Adapters eingespannt wird. Hierdurch kann auf zusätzliche Befestigungsmittel verzichtet werden, wodurch die Herstellung sowie die Handhabbarkeit des Bechers deutlich erleichtert werden. Es liegt jedoch auch im Rahmen der Erfindung, dass der Deckeleinsatz locker auf dem auskragenden Rand des ersten Schenkels aufsitzt.

Damit eine im Becher aufbewahrte bzw. gesammelte Flüssigkeit aus dem Becher ausgegossen werden kann, weist ein der Ringöffnung abgewandter, zweiter Schenkel des Adapters zumindest eine Ausnehmung auf, durch welche die Flüssigkeit aus dem Innenbereich des Bechers ausgegossen werden kann. Hierdurch wird ermöglicht, dass sowohl der Adapter als auch der in den Adapter eingesetzte oder auf den Adapter aufgesetzte erste Deckeleinsatz beim Ausgießen von Flüssigkeit nicht vom Becher abgenommen werden müssen.

Besonders bevorzugt weist der Becher weiterhin eine Schnaupe bzw. einen Ausguss auf, welche im Bereich des Randes der Wandung ausgebildet ist. Die Schnaupe bzw. der Ausguss und der Rand werden bei der Herstellung des Bechers im Spritzgussverfahren einstückig ausgebildet. Vor dem Ausgießen der Flüssigkeit aus dem Innenbereich des Bechers ist es in diesem Fall vorteilhaft, wenn zunächst die Schnaupe sowie die Ausnehmung des zweiten Schenkels des ringförmigen Adapters komplementär zueinander angeordnet werden, indem der Adapter im Bereich des Randes der Wandung entsprechend ausgerichtet wird, sodass die Flüssigkeit erst durch die Ausnehmung und dann durch die Schnaupe fließen kann. Somit ist es nicht erforderlich, dass ein Benutzer den Adapter und/oder den ersten Deckeleinsatz vom Rand abnimmt, bevor er beispielsweise eine im Innenbereich gesammelte Flüssigkeit ausgießen kann.

Damit der erste Deckeleinsatz vom Adapter in optimaler Weise gehalten werden kann, weist dieser Deckeleinsatz in einer weiteren vorteilhaften Ausgestaltung des Bechers einen umlaufenden Randbereich auf. Dieser umlaufende Randbereich des ersten Deckeleinsatzes kann im Benutzungszustand des Bechers als Anlagefläche für den ersten Schenkel des Adapters dienen. Indem der umlaufende Randbereich des ersten Deckeleinsatzes nach dem Einsetzen in den Adapter am ersten Schenkel des Adapters anliegt, wird eine im Wesentlichen flüssigkeitsdichte Verbindung zwischen dem ersten Deckeleinsatz und dem Adapter hergestellt. Hierdurch kann ein ungewolltes Austreten von Flüssigkeit im Bereich der Anlagefläche zwischen dem umlaufenden Randbereich des Deckeleinsatzes und dem ersten Schenkel des Adapters beim Ausgießen verhindert werden.

In einer weiteren vorteilhaften Ausgestaltung des Bechers weist der umlaufende Randbereich des ersten Deckeleinsatzes zumindest eine Rastnase auf. Diese Rastnase dient zur lösbaren Fixierung des Deckeleinsatzes im Adapter im Benutzungszustand. Durch das Einrasten dieser Rastnase im Adapter wird verhindert, dass der erste Deckeleinsatz aus dem Adapter herausfallen kann. Somit wird letztlich nicht nur der Adapter durch das lösbare Fixierelement im Benutzungszustand gehalten, sondern auch der erste Deckeleinsatz im Adapter. Diese voneinander unabhängige Fixierung des Adapters sowie des Deckeleinsatzes verbessert die Handhabbarkeit des Bechers sowie dessen Funktionalität.

Zur lösbaren Fixierung bzw. Halterung oder Sicherung des Adapters im Bereich des Randes der Wandung überlappt die Griffabdeckung in einer vorteilhaften Ausgestaltung des Bechers zumindest teilweise den Adapter. Um weitere Materialkosten einzusparen, kann das Fixierelement vorzugsweise auch lediglich eine Auskragung des Adapters zumindest teilweise überlappen. Hierfür kann das Fixierelement beispielsweise eine gegenüber der Griffabdeckung in Richtung des Randes der Wandung verlängerte bzw. vergrößerte Abmessung aufweisen, wodurch die Auskragung des Adapters und/oder der Adapter von dem Fixierelement zumindest teilweise überlappt werden können.

Zur optimalen Auflage des ersten Deckeleinsatzes auf dem Becherboden im Lagerzustand weist der Becherboden in einer weiteren vorteilhaften Ausgestaltung des Bechers auf einer dem Innenbereich zugewandten Seite eine im Wesentlichen umlaufende Nut auf. In diese Nut kann ein Randbereich des ersten Deckeleinsatzes eingesetzt bzw. aufgelegt werden. Wie bereits zuvor erwähnt, ermöglicht das Einlegen des ersten Deckeleinsatzes im Lagerzustand des Bechers eine gegenüber dem Benutzungszustand erhöhte Platzersparnis beim Lagern des Bechers. Hierdurch wird weiterhin gewährleistet, dass der erste Deckeleinsatz während des Aufbewahrens bzw. Lagerns des Bechers nicht verloren gehen kann. Somit wird letztlich die Handhabbarkeit des Bechers weiter optimiert.

Damit der erste Deckeleinsatz sowohl aus dem Adapter als auch aus dem Innenbereich des Bechers entnommen werden kann, weist sein Randbereich in einer weiteren vorteilhaften Ausgestaltung eine nach oben abstehende Lasche auf. Diese Lasche kann vom Benutzer in einfacher Weise ergriffen werden. Durch ein Ziehen an dieser Lasche kann der erste Deckeleinsatz aus dem Adapter herausgezogen bzw. aus dem Innenbereich des Bechers entnommen werden. Hierdurch kann zudem verhindert werden, dass der Benutzer den nach dem Gebrauch des Bechers verschmutzten Deckeleinsatz anfassen muss.

Um die Funktionalität des Bechers weiter zu erhöhen, weist der Deckel in einer weiteren vorteilhaften Ausgestaltung des Bechers zumindest einen zweiten Deckeleinsatz auf. Dieser zweite Deckeleinsatz kann für den Benutzungszustand des Bechers entsprechend dem ersten Deckeleinsatz ebenfalls in den Adapter eingesetzt oder aus diesem herausgenommen werden. Zudem kann auch dieser zweite Deckeleinsatz im Innenbereich des Bechers, d.h. auf dem Becherboden gelagert werden. Der zweite Deckeleinsatz weist vorzugsweise ein oder mehrere der zuvor beschriebenen Merkmale des ersten Deckeleinsatzes auf. Weiterhin hat es sich als vorteilhaft im Hinblick auf die Funktionalität des Bechers erwiesen, dass der erste sowie der zweite Deckeleinsatz solcherart ausgebildet sind, dass beide Deckeleinsätze aufeinandergestapelt werden können. Hierdurch wird die Lagerung beider Deckeleinsätze im Innenbereich des Bechers optimiert.

Besonders bevorzugt sind der erste Deckeleinsatz sowie der zweite Deckeleinsatz als Abdeckung, Zitruspresse oder als Reibe, d.h. als Gemüse- oder Obstreibe ausgebildet. Hierdurch kann der Benutzer wählen, ob er die Öffnung des Adapters entweder mit der Abdeckung verschließt, oder ob er beispielsweise mittels der Zitruspresse Zitrusfrüchte auspresst und den Saft dieser Früchte im Innenbereich des Bechers auffängt bzw. sammelt. Im Gegensatz dazu sind bei den aus dem Stand der Technik bekannten Bechern zur Herstellung einer Teigmischung oder einer Getränkemischung mehrere Küchengeräte erforderlich. Diese Küchengeräte müssen nach der Herstellung der Mischungen separat gereinigt und gelagert werden, was sich negativ auf ihre Handhabbarkeit auswirkt. Möchte der Benutzer beispielsweise eine Zitrusfruchtsaftschorle mit geriebenem Ingwer zubereiten, so muss er zunächst mit einer Zitruspresse verschiedene Zitrusfrüchte, wie beispielsweise Zitronen oder Orangen auspressen und diesen Saft in dem Becher sammeln. Danach muss er den Ingwer mit einer Küchenreibe fein reiben, ebenfalls in den Becher einfüllen und mit dem darin befindlichen Saft vermischen. Somit benötigt der Benutzer insgesamt drei Geräte bzw. Behältnisse zum Herstellen einer Saftschorle. Durch die aufeinander folgende Verwendung mehrerer, unterschiedlicher Deckeleinsätze wird die Funktionalität des Bechers gegenüber diesen aus dem Stand der Technik bekannten Bechern deutlich erweitert.

Anhand der beigefügten Zeichnungen werden zwei Ausführungsbeispiele des erfindungsgemäß ausgestalteten Bechers näher beschrieben und erläutert. Es zeigen:
- Figur 1: eine Explosionsdarstellung eines ersten Ausführungsbeispiels eines erfindungsgemäßen Bechers mit drei unterschiedlichen Deckeleinsätzen;
- Figur 2: eine Schnittdarstellung des ersten Ausführungsbeispiels aus Figur 1 mit einer anderen Anordnung der Deckeleinsätze;
- Figur 3: eine perspektivische Außenansicht des ersten Ausführungsbeispiels aus Figur 1;
- Figur 4: eine perspektivische Außenansicht eines zweiten Ausführungsbeispiels;
- Figur 5: ein Detail des ersten sowie zweiten Ausführungsbeispiels aus Figur 1 bzw. Figur 4 in Explosions- sowie Schnittdarstellung;
- Figur 6: ein Detail des ersten Ausführungsbeispiels aus Figur 1 in Schnittdarstellung;
- Figur 7: ein Detail des ersten Ausführungsbeispiels aus Figur 3 in Explosionssowie Schnittdarstellung;
- Figur 8: ein Detail des ersten Ausführungsbeispiels aus Figur 3 in Schnittdarstellung;
- Figur 9: eine perspektivische Außenansicht des ersten Ausführungsbeispiels aus Figur 1; und
- Figur 10: eine perspektivische Außenansicht des ersten Ausführungsbeispiels aus Figur 1 von unten.

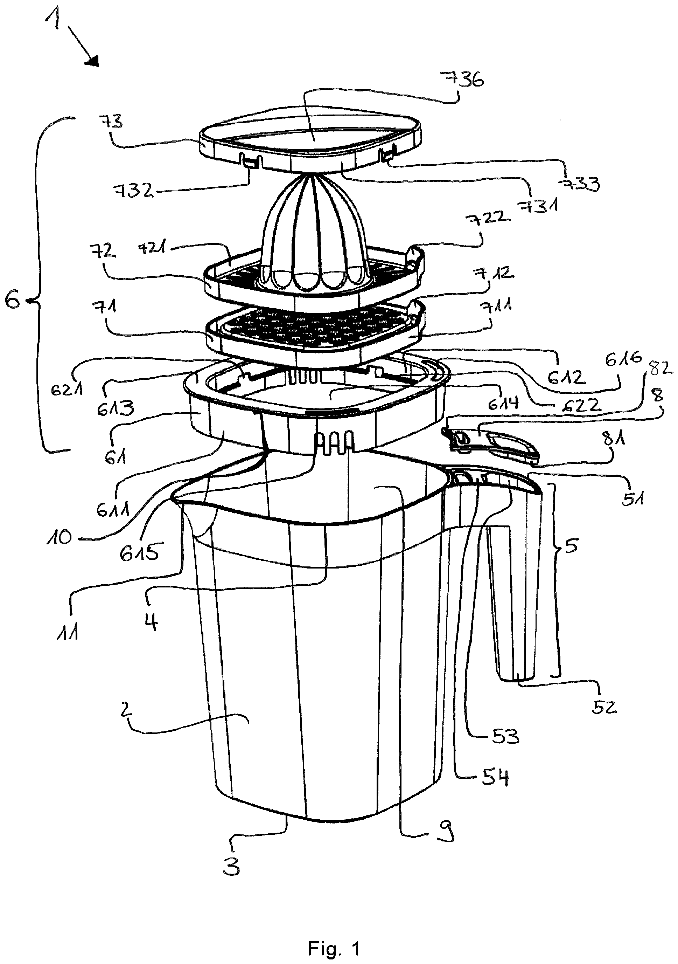

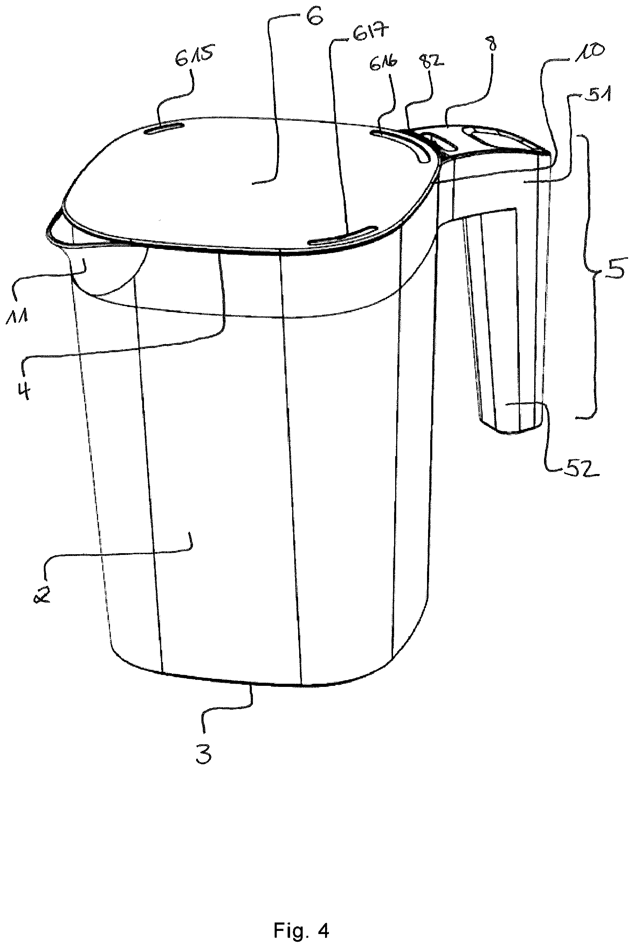

Figur 1 zeigt eine Explosionsdarstellung eines ersten Ausführungsbeispiels eines erfindungsgemäß ausgestalteten Bechers 1. Der Becher 1 weist eine umlaufende Wandung 2, einen Becherboden 3, einen dem Becherboden gegenüberliegenden Rand 4 der Wandung 2 sowie einen Griff 5 zum Halten des Bechers auf. Des Weiteren umfasst der Becher 1 einen vierteiligen Deckel 6, welcher im vorliegenden Ausführungsbeispiel als Adapter 61 mit drei unterschiedlichen Deckeleinsätzen 71, 72, 73 ausgebildet ist, die jeweils alternativ in den Adapter 61 eingesetzt werden können. Es liegt jedoch auch im Rahmen der Erfindung, wenn der Deckel 6 einteilig ausgebildet ist (siehe Figur 4). Zur Sicherung des Adapters 61 am Rand 4 des Bechers 1 weist der Becher 1 zudem ein als Griffabdeckung ausgebildetes Fixierelement 8 auf.

Im vorliegenden Ausführungsbeispiel sind alle Bestandteile des erfindungsgemäßen Bechers 1 als Spritzgussformteile aus transparentem Polypropylen ausgebildet.

Wie anhand von Figur 1 ersichtlich ist, dient der Adapter 61 des Deckelelements 6 zur Halterung eines der Deckeleinsätze 71, 72, 73. Hierfür wird der Adapter 61 im Bereich des Randes 4 der Wandung 2 angeordnet und einer der Deckeleinsätze 71, 72, 73 in den Adapter 61 eingesetzt. Im vorliegenden Ausführungsbeispiel weist der Adapter 61 eine gegenüber dem Rand 4 geringere Abmessung auf, sodass der Adapter 61 in den Bereich des Randes 4 eingesetzt werden kann. Damit der Adapter 61 hierbei nicht in einen Innenbereich 9, welcher von der umlaufenden Wandung 2 sowie dem Becherboden 3 definiert ist, hineinrutscht, weist der Adapter 61 eine umlaufende Auskragung 10 auf. Beim Einsetzen des Adapters 61 in den Bereich des Randes 4 des Bechers 1 sitzt bzw. liegt diese umlaufende Auskragung 10 auf dem Rand 4 auf. Zusätzlich sorgt jedoch die Elastizität des Kunststoffes des Adapters 61 sowie der Wandung 2 für einen festen Sitz des Adapters 61 im Bereich des Randes 4 des Bechers 1.

Zum vereinfachten Ausgießen von Flüssigkeit aus dem Innenbereich 9 des Bechers 1 weist der Rand 4 eine Schnaupe 11 auf. Um zu verhindern, dass beim Ausgießen Flüssigkeit von dem Adapter 61 zurückgehalten wird, weist der Adapter 61 eine Ausnehmung 12 auf (in Figur 1 nicht gezeigt). Vor dem Ausgießen von Flüssigkeit aus dem Innenbereich 9 des Bechers 1 müssen die Schnaupe 11 sowie die Ausnehmung 12 komplementär zueinander angeordnet werden, indem der Adapter 61 im Bereich des Randes 4 der Wandung 2 entsprechend gedreht oder versetzt wird. Die Schnaupe 11 und die Ausnehmung 12 können jedoch auch derart positioniert werden, dass keine Flüssigkeit aus dem Innenbereich 9 des Bechers 1 austreten kann. Hierdurch wird beim Transport des Bechers 1 gewährleistet, dass keine Flüssigkeit ungewollt aus dem Becher 1 austritt.

Der Adapter 61 ist gemäß dem vorliegenden Ausführungsbeispiel im Querschnitt im Wesentlichen U-förmig ausgebildet und weist einen ersten Schenkel 611, einen zweiten Schenkel 612 sowie einen diese Schenkel 611, 612 verbindenden Steg 613 auf. Der Adapter 61 ist ringförmig ausgebildet und umschließt eine Öffnung 614, in welche Öffnung 614 einer der gezeigten Deckeleinsätze 71, 72, 73 im Benutzungszustand des Bechers 1 einsetzbar ist. Der Steg 613 des Adapters 61 weist zwei Belüftungsschlitze 615, 616 auf, welche beim Ausgießen der Flüssigkeit aus dem Innenbereich 9 des Bechers 1 zum Druckausgleich dienen und somit das Ausgießen von Flüssigkeit deutlich erleichtern.

Einer der gezeigten Deckeleinsätze 71, 72, 73 ist im vorliegenden Ausführungsbeispiel als Abdeckung 73 ausgebildet und weist einen umlaufenden Randbereich 731 auf. Um ein Herausfallen der Abdeckung 73 aus der Öffnung 64 des Adapters 61 zu verhindern, weist dieser umlaufende Randbereich 731 der Abdeckung 73 vier Rastnasen 732, 733, 734, 735 auf, wovon in der vorliegenden Figur 1 nur zwei sichtbar sind. Beim Einsetzen der Abdeckung 73 in den Adapter 61 liegt der umlaufende Randbereich 731 am zweiten Schenkel 612 des Adapters 61 an. Die Rastnasen 732, 733, 734, 735 rasten in hierzu komplementäre Ausnehmungen 621, 622, 623, 624 des zweiten Schenkels 612 des Adapters 61 ein. Hierdurch wird die Abdeckung 73 lösbar am Adapter 61 gehalten und verschließt die Öffnung 614 des Adapters 61 flüssigkeitsdicht.

Der Griff 5 des Bechers 1 weist einen Verbindungsabschnitt 51 auf, welcher auf der dem Innenbereich 9 abgewandten Seite des Randes 4 der Wandung 2 angeordnet ist, sowie einen Griffabschnitt 52 zum Halten des Bechers 1. Im vorliegenden Ausführungsbeispiel erstreckt sich der Griffabschnitt 52 annähernd senkrecht vom Verbindungsabschnitt 51 in Richtung des Becherbodens 3 des Bechers 1 und ist daher annähernd parallel zur Wandung 2 des Bechers 2 angeordnet. Aufgrund der Tatsache, dass es sich bei allen Bestandteilen des Bechers 1 um Spritzgussformteile aus Polypropylen handelt, weist der Griff 5 im Bereich des Verbindungsabschnitts 51 fertigungstechnisch bedingt eine Öffnung 53 auf, hinter welcher Öffnung 53 sich ein entlang des gesamten Griffabschnitts 52 erstreckender Hohlraum befindet. Das als Griffabdeckung ausgebildete Fixierelement 8 weist einen zu dieser Öffnung 53 komplementären umlaufenden Rand 81 auf, welcher in die Öffnung 53 eingesteckt werden kann. Hierdurch wird ein sicherer Sitz des als Griffabdeckung ausgebildeten Fixierelements 8 auf dem Verbindungsabschnitt 51 des Griffs 5 gewährleistet, sodass das Fixierelement 8 nicht seitlich vom Verbindungsabschnitt 51 abrutschen kann.

Im vorliegenden Ausführungsbeispiel überdeckt das Fixierelement 8 den Verbindungsabschnitt 51 annähernd vollständig. Um den Sitz des Fixierelements 8 auf dem Verbindungsabschnitt 51 weiter zu verbessern, weist der Verbindungsabschnitt 51 eine Aufnahme 54 auf, in welche das Fixierelement 8 im Wesentlichen vollständig eingesetzt wird.

Zur lösbaren Fixierung des Adapters 61 im Bereich des Randes 4 der Wandung 2 weist das Fixierelement 8 eine in Richtung des Adapters 61 einstückig angeformte Überkragung 82 auf, welche den Steg 613 des Adapters 61 teilweise überlappt. Genauer gesagt, überlappt die in Richtung des Adapters 61 einstückig angeformte Überkragung 82 des Fixierelements 8 die umlaufende Auskragung 10 des Adapters 61. Indem ein Benutzer den Griffabschnitt 52 des Griffs 5 mit seiner Hand umschließt und den Daumen auf das als Griffabdeckung ausgebildete Fixierelement 8 legt bzw. das Fixierelement 8 auf den Verbindungsabschnitt 51 aufpresst, wird der Adapter 61 auch beim Ausgießen von Flüssigkeit aus dem Innenbereich 9 des Bechers 1 im Bereich des Randes 4 der Wandung 2 sicher gehalten und kann somit nicht aus dem Rand herausrutschen bzw. herausfallen. Hierdurch wird ein unkontrolliertes Verschütten der Flüssigkeit aus dem Innenbereich 9 beim Ausgießen verhindert.

Anstatt des Deckels 73 kann im Adapter 61 auch eine Reibe 71 oder eine Zitruspresse 72 als Deckeleinsatz angeordnet werden. Im vorliegenden Ausführungsbeispiel weisen sowohl die Reibe 71 als auch die Zitruspresse 72 einen umlaufenden Randbereich 711, 721 auf. Um sowohl die Reibe 71 als auch die Zitruspresse 72 in den Adapter 61 hineinzusetzen bzw. aus diesem herauszuholen, weisen beide Bechereinstätze 71, 72 eine nach oben überstehende Lasche 712, 722 auf, welche am umlaufenden Randbereich 711, 721 der beiden Deckeleinsätze angeordnet ist. Diese Lasche 712, 722 kann von einem Benutzer beispielsweise mit dem Daumen und dem Zeigefinger ergriffen werden, und dann gemeinsam mit dem jeweiligen Deckeleinsatz 71, 72 aus dem Adapter 61 herausgezogen werden. Somit kann ein Benutzer den jeweiligen Deckeleinsatz 71, 72 in einfacher Weise wechseln. Die Möglichkeit unterschiedliche Deckeleinsätze 71, 72 in den Adapter 61 einzusetzen und auch wieder herauszunehmen erweitert die Funktionalität eines derartigen Bechers gegenüber den aus dem Stand der Technik bekannten Becher deutlich.

Durch die als Reibe bzw. Zitruspresse ausgebildeten Deckeleinsätze 71, 72 können verschiedenen Früchte oder auch Gemüse ausgepresst bzw. gerieben werden, und der hierbei entstehende Saft mit oder ohne Fruchtfleisch im Innenbereich 9 des Bechers 1 gesammelt werden.

Zur Bestimmung der im Innenbereich 9 des Bechers 1 gesammelten bzw. aufbewahrten Flüssigkeit weist die Wandung 2 weiterhin eine Messskala 21 auf (in Figur 1 nicht dargestellt). Damit ein Benutzer an dieser Messskala das im Innenbereich 9 gesammelte bzw. aufbewahrte Volumen bestimmen kann, ist die Wandung 2 im vorliegenden Ausführungsbeispiel aus im Wesentlichen transparentem Polypropylen ausgebildet.

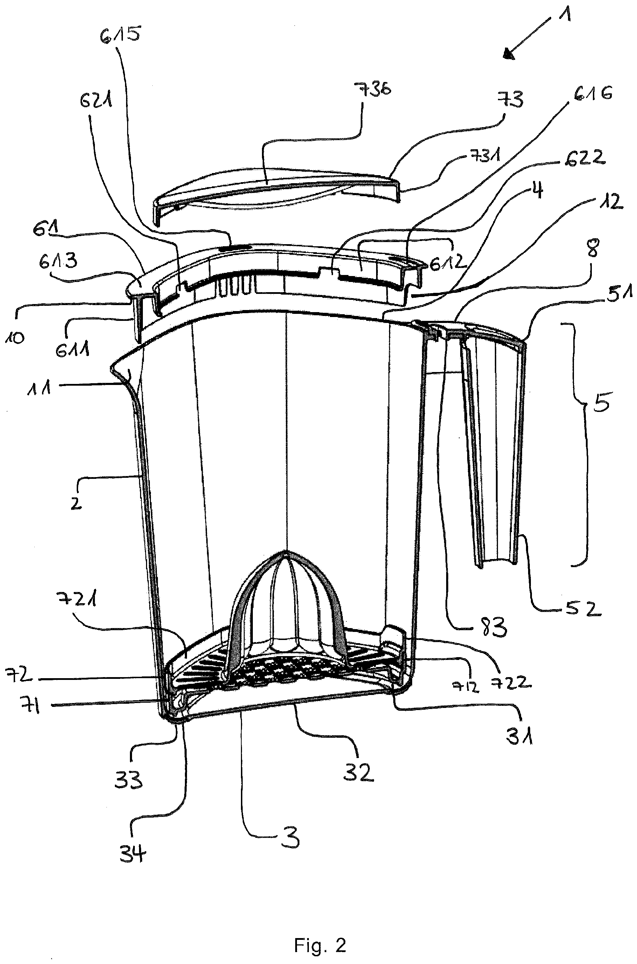

Figur 2 zeigt das Ausführungsbeispiels des Bechers 1 aus Figur 1 als Schnittdarstellung, sodass man in den Innenbereich 9 blickt. Der Becher 1 befindet sich hier in einem Lagerzustand, in welchem die beiden Deckeleinsätze 71, 72, d.h. die Reibe 71 und die Zitruspresse 72 auf dem Becherboden 3 gestapelt vorliegen. Die beiden Deckeleinsätze 71, 72 sind dabei solcherart ausgebildet, dass bei ihrem Aufeinanderstapeln die jeweiligen Randbereiche 711, 721 aufeinander aufsitzen. Ein Benutzer kann die beiden Deckeleinsätze 71, 72 nacheinander aus dem Innenbereich 9 des Bechers 1 entnehmen, indem er die nach oben abstehenden Laschen 712, 722 ergreift und nach oben aus dem Innenraum 9 herauszieht.

Damit der Deckeleinsatz 71, 72 optimal auf den Becherboden 3 des Bechers 1 aufgelegt werden kann, weist der Becherboden 3 auf einer dem Innenbereich 9 zugewandten Seite eine umlaufende Nut 31 auf. Zusätzlich weist der Becherboden 3 eine Innenwölbung 32 auf, wodurch im Bereich der umlaufenden Nut 31 auf einer Außenseite des Becherbodens eine Außenwölbung 33 ausgebildet ist. Diese Außenwölbung ist mit einem umlaufenden Becherbodenring 34 versehen, welche die Stand- bzw. Auflagefläche des Bechers am Becherboden 3 bildet. Hierdurch wird ein optimaler Stand des Bechers 1 auf einer Oberfläche gewährleistet.

Wie in Figur 2 dargestellt ist, ist das als Griffabdeckung ausgebildete Fixierelement 8 auf dem Verbindungsabschnitt 51 des Griffs 5 angeordnet. Damit das Fixierelement 8 auch ohne zusätzlichen Druck, welcher durch das Auflegen des Daumens auf das Fixierelement 8 entsteht, am Griff gehalten werden kann, weist das Fixierelement ein Rastmittel 83 auf, welches am Verbindungsabschnitt 51 des Griffs 5 verrastet.

Weiterhin ist aus Figur 2 ersichtlich, dass die Wandung 2 eine zum Becherboden hin konisch verlaufende Form aufweist. Dies ermöglicht, dass mehrere Becher 1 ineinander gestapelt werden können. Selbstverständlich müssen für ein solches Ineinanderstapeln die Deckeleinsätze 71, 72, 73 sowie der Adapter 61 vom Rand 4 entfernt werden. Der Griff 5 kann hierbei in den unter der Öffnung 53 ausgebildeten Hohlraum eines darunter stehenden, zweiten Bechers eingesteckt werden. Durch eine derartige Nestbarkeit des Bechers 1 kann beim Lagern sowie beim Transport Volumen eingespart werden. Beispielsweise können eine Vielzahl an Bechern ineinander gestapelt bzw. genestet vom Produzent zum Vertriebspartner transportiert werden, wodurch das Transportvolumen dieser Becher im Vergleich zu Bechern, welche nicht genestet werden können, deutlich verringert wird.

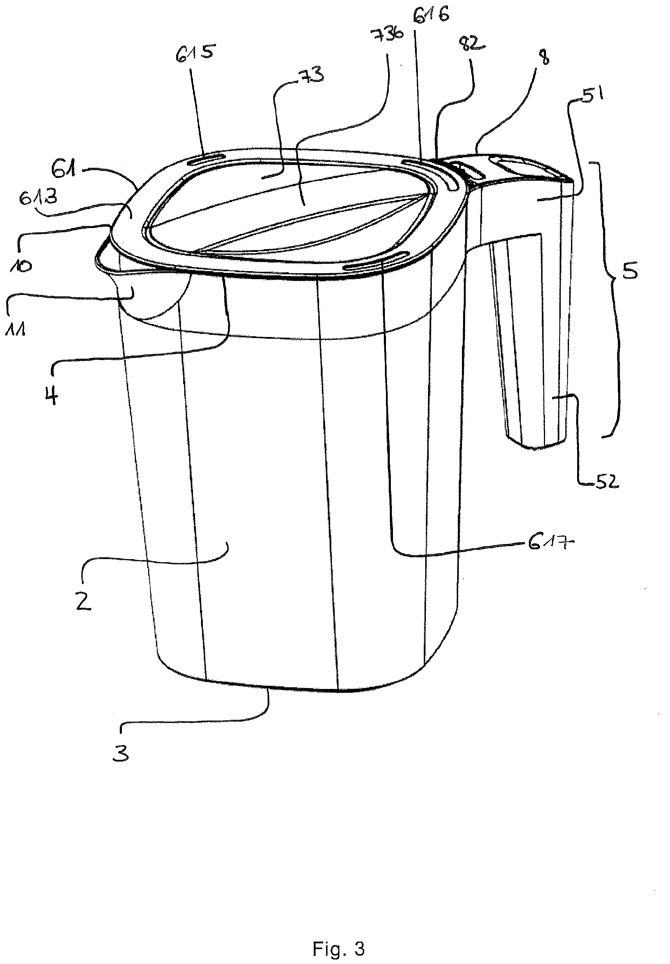

Figur 3 zeigt eine perspektivische Außenansicht des Ausführungsbeispiels des Bechers 1 aus Figur 1. In diesem Fall ist der Adapter 61 im Bereich des Randes 4 des Bechers 1 angeordnet bzw. im Bereich des Randes 4 eingesetzt. Der als Abdeckung ausgebildete Deckeleinsatz 73 befindet sich in der Öffnung 64 des Adapters 61. Aus dieser Figur 3 wird ersichtlich, dass die Belüftungsöffnungen 615, 616 und 617 dazu dienen, einen Druckausgleich im Innenbereich 9 zu ermöglichen, wenn Flüssigkeit aus dem Innenbereich 9 des Bechers 1 herausgegossen wird.

Weiterhin geht aus Figur 3 hervor, dass die einstückig angeformte Überkragung 82 des Fixierelements 8 die umlaufende Auskragung 10 des Adapters 61 überlappt, um den Adapter 61 auch in gekipptem Zustand des Bechers 1, d.h. beim Ausgießen von Flüssigkeit im Bereich des Randes 4 der Wandung 2 zu halten.

Figur 4 zeigt ein zweites Ausführungsbeispiel des erfindungsgemäß ausgestalteten Bechers 1. Dieses zweite Ausführungsbeispiel unterscheidet sich vom ersten Ausführungsbeispiel lediglich dadurch, dass es einen einteilig ausgebildeten Deckel 6 aufweist. Das bedeutet, dass im Fall dieses zweiten Ausführungsbeispiels der Becher 1 weder Deckeleinsätze 71, 72, 73 noch einen Adapter 61 umfasst. Zur lösbaren Fixierung dieses einteiligen Deckels 6 im Bereich des Randes 4 der Wandung 2 überlappt die angeformte Überkragung 82 des Fixierelements 8 eine Oberseite 618 des Deckels 6 teilweise. Genauer gesagt, überlappt die in Richtung des Adapters 61 einstückig angeformte Überkragung 82 des Fixierelements 8 eine umlaufende Auskragung 10 des Deckels 6. Indem ein Benutzer den Griffabschnitt 52 des Griffs 5 mit seiner Hand umschließt und den Daumen auf das als Griffabdeckung ausgebildete Fixierelement 8 legt bzw. das Fixierelement 8 auf den Verbindungsabschnitt 51 aufpresst, wird der Deckel 6 auch beim Ausgießen von Flüssigkeit aus dem Innenbereich 9 des Bechers 1 im Bereich des Randes 4 der Wandung 2 sicher gehalten und kann somit nicht herausrutschen bzw. herausfallen. Hierdurch wird, wie bereits beim zuvor beschriebenen ersten Ausführungsbeispiel, ein unkontrolliertes Verschütten der Flüssigkeit aus dem Innenbereich 9 beim Ausgießen verhindert. Dies wirkt sich letztlich positiv auf die Handhabbarkeit des Bechers 1 aus.

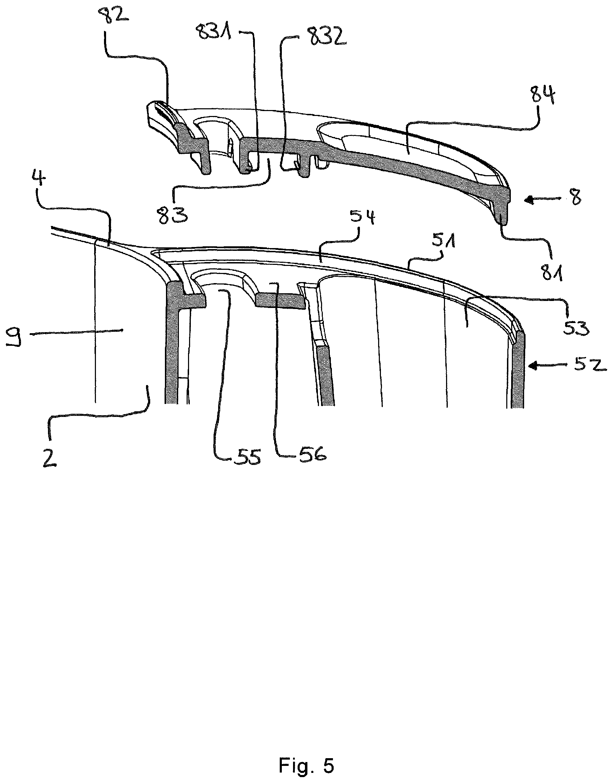

Figur 5 zeigt einen Ausschnitt des Verbindungsabschnitts 51 des Griffs 5 mit dem als Griffabdeckung ausgebildeten Fixierelement 8 in beiden Ausführungsbeispielen in geschnittener Explosionsdarstellung.

Wie bereits zuvor erwähnt, weist der Griffabschnitt 52 in beiden Ausführungsbeispielen fertigungstechnisch bedingt einen unterhalb der Öffnung 53 angeordneten Hohlraum auf, welcher sich im Wesentlichen durch den gesamten Griffabschnitt 52 erstreckt. Um eine bequeme Auflage für den Daumen des Benutzers zu schaffen, weist das Fixierelement 8 eine als Aufnahme ausgebildete Auflagefläche 84 auf. Umschließt ein Benutzer den Griffabschnitt 52 mit seiner Hand, so kann er den Daumen auf diese Auflagefläche 84 auflegen.

Der Verbindungsabschnitt 51 weist die Aufnahme 54 auf, in welche das Fixierelement 8 im Wesentlichen vollständig eingesetzt wird. Dadurch ist das Fixierelement 8 in der Aufnahme 54 rahmenartig umgeben, wodurch ein seitliches Verrutschen des Fixierelements 8 auf dem Verbindungsabschnitt 51 verhindert wird. Zwischen der Öffnung 53 des Griffabschnitts 52 und dem Rand 4 der Wandung 2 weist der Verbindungsabschnitt eine zweite Öffnung 55 auf, zwischen welcher zweiten Öffnung 55 und der ersten Öffnung 53 ein Steg 56 angeordnet ist. Auf diesen Steg 56 wird das Fixierelement 8 mit dem Rastmittel 83 aufgeclipst. Durch dieses Aufclipsen wird der Verbindung zwischen dem Fixierelement 8 und dem Verbindungsabschnitt 51 des Griffs 5 zusätzliche Stabilität verliehen. Das Rastmittel 83 weist zwei einander zugewandte Rastnasen 831, 832 auf, welche nach dem Auflegen des Fixierelements 8 auf den Verbindungsabschnitt 52 des Griffs 5 vom Benutzer über den Steg 56 des Verbindungsabschnitt 52 gedrückt werden müssen, um an diesem Steg 56 zu verrasten.

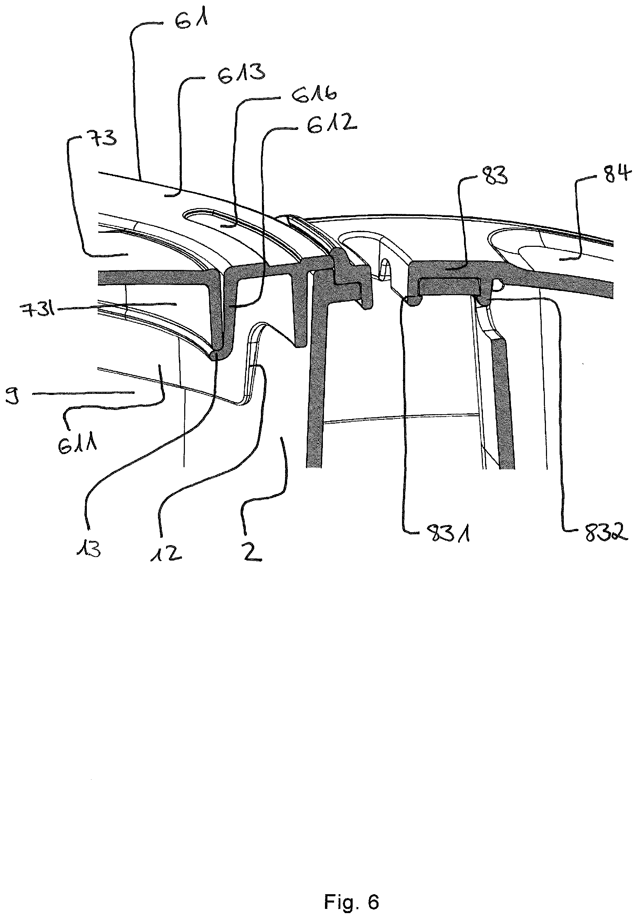

Figur 6 zeigt einen ähnlichen Ausschnitt des ersten Ausführungsbeispiels des Bechers 1 nur in Schnittdarstellung. Dieser Figur ist weiterhin zu entnehmen, dass der Deckeleinsatz 73 beim Einsetzen in die Öffnung 64 des Adapters 61 auf einen in Richtung dieser Öffnung hin auskragenden Rand 13 des zweiten Schenkels 612 aufgesetzt bzw. aufgelegt wird. Hierdurch wird verhindert, dass der Deckeleinsatz 73 in den Innenbereich 9 des Bechers 1 hineinfällt. Des Weiteren weisen die beiden Schenkel 611, 62 eine voneinander abweichende Länge auf. Der erste Schenkel 611 ist im Vergleich zum zweiten Schenkel 612 länger ausgebildet.

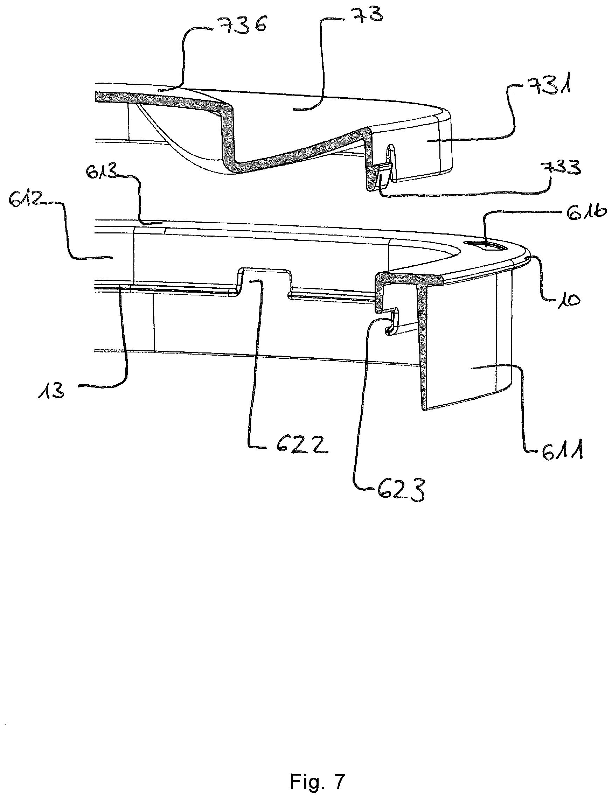

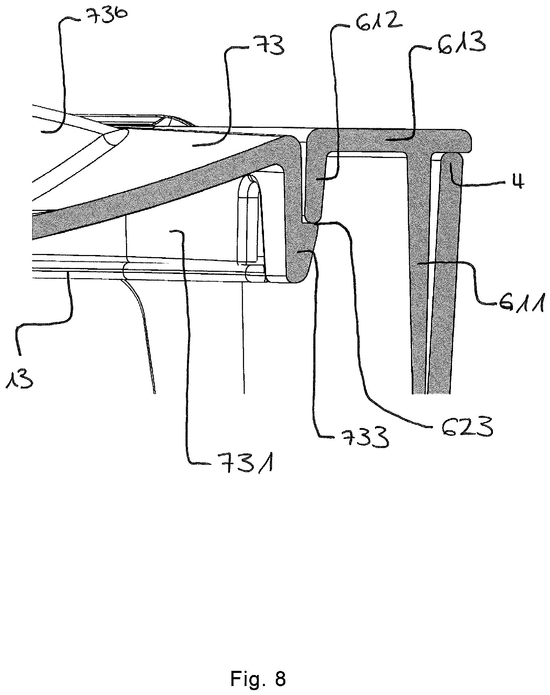

Die Figuren 7 und 8 zeigen eine Detaildarstellung des Adapters 61 mit dem als Abdeckung ausgebildeten Deckeleinsatz 73 als Schnittdarstellung. Hierbei wird ersichtlich, wie die Rastnase 733 in die hierzu komplementäre Ausnehmung 623 des Adapters 61 einrastet, während die außen umlaufende Auskragung 10 des Adapters 61 auf dem Rand 4 der Wandung 2 aufliegt. Hierbei sitzt der umlaufende Randbereich 731 des Deckeleinsatzes 73 auf dem auskragenden Rand 13 des zweiten Schenkels 612 des Adapters 61 auf. Hierdurch wird ein optimaler Sitz des Deckeleinsatzes 73 im Adapter 61 gewährleistet.

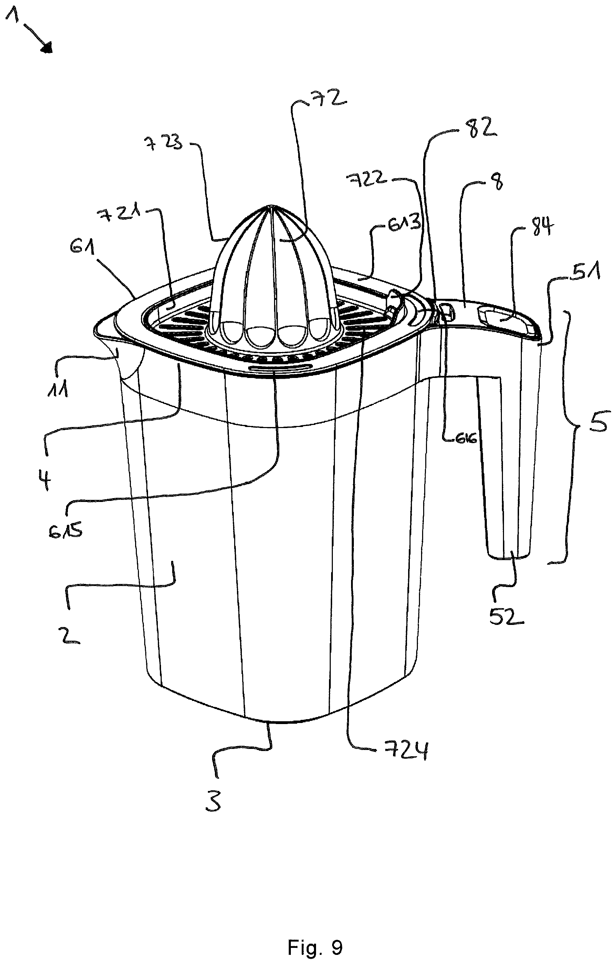

Figur 9 zeigt das zuvor beschriebene erste Ausführungsbeispiel des Bechers 1 mit einem als Zitruspresse ausgebildeten Deckeleinsatz 72, welcher in den Adapter 61 eingesetzt wurde. Dieser Deckeleinsatz 72 weist einen für Zitruspressen allgemein bekannten Aufbau auf mit einem Presskegel 723 sowie mehreren zum Presskegel 723 radial sowie senkrecht angeordneten, schlitzförmig ausgebildeten Flüssigkeitsdurchlässen 724. Der Benutzer kann beispielsweise eine Zitrone mit dem als Zitruspresse ausgebildeten Deckeleinsatz 72 auspressen, den gebildeten Zitronensaft im Innenbereich 9 des Bechers sammeln und anschließend die Zitruspresse durch den als Abdeckung ausgebildeten Deckeleinsatz 73 ersetzen. Alternativ kann in den Adapter 61 auch der als Reibe ausgebildete Deckeleinsatz 71 eingesetzt werden. Die Erfindung ist jedoch nicht auf die zuvor beschriebenen Deckeleinsätzen beschränkt.

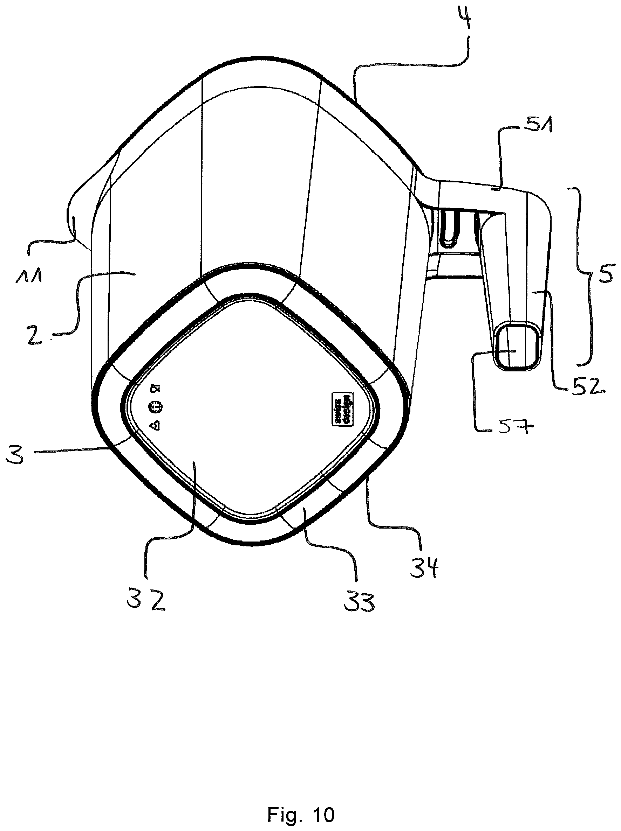

Figur 10 zeigt das erste Ausführungsbeispiel des Bechers 1 in perspektivischer Darstellung von unten, weswegen der Becherboden 3 sichtbar ist. Dieser Becherboden 3 weist - wie bereits zuvor beschrieben - eine umlaufende Außenwölbung 33 auf, welche mit einem umlaufenden Becherbodenring 34 versehen ist. Dieser Becherbodenring 34 dient als Stand- bzw. Auflagefläche des Bechers. Hierdurch wird ein optimaler Stand des Bechers 1 auf einer Oberfläche gewährleistet.

Weiterhin wird in Figur 10 nochmals ersichtlich, dass der Griffabschnitt 52 des Griffs einen Hohlraum aufweist, welcher sich von der ersten Öffnung 53 im Bereich des Verbindungsabschnittes 52 bis zu einer zweiten Öffnung 57 am unteren Ende des Griffabschnitts 52 erstreckt. Er ermöglicht im Zusammenhang mit dem aufclipsbaren und damit abnehmbaren Fixierelement 8 ein Nesten mehrerer Becher 1, indem zwei oder mehrere Becher 1 ineinander gestapelt bzw. genestet werden und der Griffabschnitt 52 eines ersten Bechers 1 in den Hohlraum eines zweiten Bechers eingesteckt wird. Ohne das erfindungsgemäß bevorzugt als abnehmbare Griffabdeckung ausgestaltete Fixierelement 8 wäre der Verbindungsabschnitt 52 entweder offen, was die Handhabbarkeit beeinträchtigt, oder aber geschlossen, wodurch die Nestbarkeit des Bechers ausgeschlossen würde. Das als abnehmbare Griffabdeckung ausgestaltete Fixierelement 8 löst diesen Zielkonflikt auf und gewährleistet außerdem, dass der Adapter 61 zuverlässig gehalten wird.

## Patentansprüche

1. Becher (1) aus spritzgegossenem Kunststoff, insbesondere zum Aufbewahren sowie zur Ausgabe von Flüssigkeiten und schüttfähigen Feststoffen, mit einer im Wesentlichen umlaufenden Wandung (2), einem Becherboden (3), wobei die Wandung (2) und der Becherboden (3) einen Innenbereich (9) des Bechers (1) definieren, einem dem Becherboden (3) gegenüberliegenden Rand (4) der Wandung (2), einem an einer Außenseite der Wandung (2) angeordneten Griff (5) zum Halten des Bechers (1) sowie einem ein- oder mehrteiligen, auf den Rand (4) aufsetzbaren oder in den Rand (4) einsetzbaren Deckel (6),
**dadurch gekennzeichnet,**
**dass** der Becher (1) weiterhin ein als Griffabdeckung ausgebildetes, lösbares Fixierelement (8) aufweist, welches den Deckel (6) in einem Benutzungszustand des Bechers (1) im Bereich des Randes (4) der Wandung (2) lösbar fixiert und/oder sichert.

2. Becher (1) nach Anspruch 1,
**dadurch gekennzeichnet,**
**dass** der Griff (5) einen Verbindungsabschnitt (51), welcher auf der dem Innenbereich (9) abgewandten Seite des Randes (4) der Wandung (2) angeordnet ist, sowie einen Griffabschnitt (52) zum Halten des Bechers (1) aufweist, wobei das als Griffabdeckung ausgebildete Fixierelement (8) auf den Verbindungsabschnitt (51) aufsetzbar und von diesem abnehmbar ist.

3. Becher (1) nach Anspruch 2,
**dadurch gekennzeichnet,**
**dass** der Verbindungsabschnitt (51) des Griffs (5) eine erste Öffnung (53) aufweist, die im Wesentlichen mit einem Hohlraum im Griffabschnitt (52) fluchtet, und dass das Fixierelement (8) die erste Öffnung (53) im Wesentlichen vollständig abdeckt.

4. Becher (1) nach zumindest einem der Ansprüche 2 oder 3,
**dadurch gekennzeichnet,**
**dass** das Fixierelement (8) lösbar auf den Verbindungsabschnitt (51) aufclipsbar ist.

5. Becher (1) nach zumindest einem der Ansprüche 1 bis 4,
**dadurch gekennzeichnet**,
das der Deckel (6) einen Adapter (61) sowie zumindest einen ersten Deckeleinsatz (71, 72, 73) umfasst, wobei der erste Deckeleinsatz (71, 72, 73) für den Benutzungszustand des Bechers (1) in den Adapter (61) einsetzbar oder auf den Adapter (61) aufsetzbar ist und in einem Lagerzustand des Bechers (1) auf den Becherboden (3) auflegbar ist.

6. Becher (1) nach Anspruch 5,
**dadurch gekennzeichnet,**
**dass** der Adapter (61) im Querschnitt im Wesentlichen U-förmig mit einem ersten Schenkel (611) und einem zweiten Schenkel (612) und einem diese Schenkel (611, 612) verbindenden Steg (613) ausgebildet ist, wobei der Adapter (61) im Wesentlichen ringförmig ausgebildet ist und eine Öffnung (614) umschließt, in oder auf welche Öffnung (614) der erste Deckeleinsatz (71, 72, 73) für den Benutzungszustand des Bechers (1) einsetzbar oder aufsetzbar ist.

7. Becher (1) nach zumindest einem der Ansprüche 5 oder 6,
**dadurch gekennzeichnet,**
**dass** der Adapter (61) eine im Wesentlichen umlaufende Auskragung (10) aufweist, welche auf den Rand (4) der Wandung (2) aufsetzbar ist.

8. Becher (1) nach zumindest einem der Ansprüche 6 oder 7,
**dadurch gekennzeichnet,**
**dass** der der Öffnung (614) zugewandte, zweite Schenkel (612) des Adapters (61) einen in Richtung der Öffnung (614) des Adapters (61) auskragenden Rand (13) zum Aufsetzen des ersten Deckeleinsatzes (71, 72, 73) aufweist.

9. Becher (1) nach zumindest einem der Ansprüche 6 bis 8,
**dadurch gekennzeichnet,**
**dass** der der Öffnung (614) abgewandte, erste Schenkel (611) zumindest eine Ausnehmung (12) aufweist.

10. Becher (1) nach zumindest einem der Ansprüche 6 bis 9,
**dadurch gekennzeichnet,**
**dass** der erste Deckeleinsatz (71, 72, 73) einen umlaufenden Randbereich (711, 721, 731) aufweist, welcher im Benutzungszustand als Anlagefläche für den ersten Schenkel (612) des Adapters (61) dient.

11. Becher (1) nach Anspruch 10,
**dadurch gekennzeichnet,**
**dass** der umlaufende Randbereich (711, 721, 731) des ersten Deckeleinsatzes (71, 72, 73) zumindest eine Rastnase (732, 733, 734, 735) aufweist, welche Rastnase (732, 733, 734, 735) zur lösbaren Fixierung des ersten Deckeleinsatzes (71, 72, 73) im Adapter (61) im Benutzungszustand dient.

12. Becher (1) nach zumindest einem der Ansprüche 6 bis 11,
**dadurch gekennzeichnet,**
**dass** das Fixierelement (8) den Adapter (61), vorzugsweise die umlaufende Auskragung (10) des Adapters (61), zumindest teilweise überlappt.

13. Becher (1) nach zumindest einem der Ansprüche 10 bis 12,
**dadurch gekennzeichnet,**
**dass** auf einer dem Innenbereich (9) zugewandten Seite des Becherbodens (3) eine umlaufende Nut (31) angeordnet ist, in welche der Randbereich (711, 721, 731) des ersten Deckeleinsatzes (71, 72, 73) im Lagerzustand des Bechers (1) einsetzbar ist.

14. Becher (1) nach zumindest einem der Ansprüche 10 bis 13,
**dadurch gekennzeichnet,**
**dass** der Randbereich (711, 721, 731) des ersten Deckeleinsatzes (71, 72, 73) eine nach oben überstehende Lasche (712, 722) aufweist.

15. Becher (1) nach zumindest einem der Ansprüche 5 bis 14,
**dadurch gekennzeichnet,**
**dass** der Becher (1) mindestens einen zweiten Deckeleinsatz (71, 72, 73) aufweist, wobei der erste und der zweite Deckeleinsatz (71, 72, 73) alternativ in den Adapter (61) einsetzbar und gestapelt auf den Becherboden (3) auflegbar sind.

## Claims

1. Jug (1) made of injection-moulded plastics, especially for storing and for dispensing liquids and pourable solids, having a substantially circumferential wall (2), a jug base (3), wherein the wall (2) and the jug base (3) define an interior region (9) of the jug (1); a rim (4) of the wall (2) located opposite the jug base (3), a handle (5) arranged on an outer side of the wall (2) for holding the jug (1), and a one-part or multi-part lid (6) which is mountable on the rim (4) or insertable into the rim (4),
**characterised in that**
the jug (1) further has a releasable fixing element (8), in the form of a handle cover, which in an in-use state of the jug (1) releasably fixes and/or secures the lid (6) in the region of the rim (4) of the wall (2).

2. Jug (1) according to claim 1,
**characterised in that**
the handle (5) has a connecting portion (51) which is arranged on the side of the rim (4) of the wall (2) that faces away from the interior region (9), and a handle portion (52) for holding the jug (1), wherein the fixing element (8) in the form of a handle cover is mountable on the connecting portion (51) and removable therefrom.

3. Jug (1) according to claim 2,
**characterised in that**
the connecting portion (51) of the handle (5) has a first opening (53) which is substantially in alignment with a cavity in the handle portion (52); and the fixing element (8) substantially completely covers the first opening (53).

4. Jug (1) according to at least one of claims 2 and 3,
**characterised in that**
the fixing element (8) is releasably clippable onto the connecting portion (51).

5. Jug (1) according to at least one of claims 1 to 4,
**characterised in that**
the lid (6) comprises an adapter (61) and at least one first lid insert (71, 72, 73), wherein, for the in-use state of the jug (1), the first lid insert (71, 72, 73) is insertable into the adapter (61) or mountable on the adapter (61) and, in a storage state of the jug (1), is placeable on the jug base (3).

6. Jug (1) according to claim 5,
**characterised in that**
the adapter (61) is substantially U-shaped in cross-section with a first limb (611) and a second limb (612) and a web (613) connecting the limbs (611, 612), wherein the adapter (61) is substantially ringshaped and surrounds an opening (614), into or onto which opening (614) the first lid insert (71, 72, 73) is insertable or mountable for the in-use state of the jug (1).

7. Jug (1) according to at least one of claims 5 and 6,
**characterised in that**
the adapter (61) has a substantially circumferential projection (10) which is mountable on the rim (4) of the wall (2).

8. Jug (1) according to at least one of claims 6 and 7,
**characterised in that**
the second limb (612) of the adapter (61), which limb faces towards the opening (614), has a rim (13) for mounting the first lid insert (71, 72, 73), which rim projects in the direction of the opening (614) of the adapter (61).

9. Jug (1) according to at least one of claims 6 to 8,
**characterised in that**
the first limb (611), which is remote from the opening (614), has at least one recess (12).

10. Jug (1) according to at least one of claims 6 to 9,
**characterised in that**
the first lid insert (71, 72, 73) has a circumferential rim region (711, 721, 731) which, in the in-use state, serves as contact surface for the first limb (612) of the adapter (61).

11. Jug (1) according to claim 10,
**characterised in that**
the circumferential rim region (711, 721, 731) of the first lid insert (71, 72, 73) has at least one snap-in lug (732, 733, 734, 735), which snap-in lug (732, 733, 734, 735) serves for releasable fixing of the first lid insert (71, 72, 73) in the adapter (61) in the in-use state.

12. Jug (1) according to at least one of claims 6 to 11,
**characterised in that**
the fixing element (8) at least partly overlaps the adapter (61), preferably the circumferential projection (10) of the adapter (61).

13. Jug (1) according to at least one of claims 10 to 12,
**characterised in that**
on a side of the jug base (3) that faces towards the interior region (9) there is arranged a circumferential groove (31) into which the rim region (711, 721, 731) of the first lid insert (71, 72, 73) is insertable in the storage state of the jug (1).

14. Jug (1) according to at least one of claims 10 to 13,
**characterised in that**
the rim region (711, 721, 731) of the first lid insert (71, 72, 73) has an upwardly projecting tab (712, 722).

15. Jug (1) according to at least one of claims 5 to 14,
**characterised in that**
the jug (1) has at least one second lid insert (71, 72, 73), wherein the first and second lid inserts (71, 72, 73) can be inserted into the adapter (61) as alternatives and can be placed in a stack on the jug base (3).

## Revendications

1. Cruchon (1) en matière plastique moulée par injection, notamment destiné à la conservation, ainsi qu'à la distribution de liquides et de substances solides à écoulement fluide, comprenant une paroi (2) sensiblement périphérique ; un fond (3), ladite paroi (2) et ledit fond (3) définissant une région intérieure (9) dudit cruchon (1) ; un bord (4) de ladite paroi (2), tourné à l'opposé dudit fond (3) du cruchon ; une poignée (5), disposée sur une face extérieure de ladite paroi (2) et affectée à la tenue en main dudit cruchon (1) ; ainsi qu'un couvercle (6) en une ou plusieurs partie(s), pouvant être mis en place sur le bord (4) ou pouvant être inséré dans ledit bord (4),
**caractérisé par le fait**
**que** ledit cruchon (1) est muni, par ailleurs, d'un élément amovible (8) de blocage à demeure, réalisé sous la forme d'un couvre-poignée et assurant de manière libérable, dans une condition d'utilisation dudit cruchon (1), un blocage à demeure et/ou un arrêt du couvercle (6) dans la région du bord (4) de la paroi (2).

2. Cruchon (1) selon la revendication 1,
**caractérisé par le fait**
**que** la poignée (5) comprend une zone de liaison (51), située du côté du bord (4) de la paroi (2) qui pointe à l'opposé de la région intérieure (9), ainsi qu'une zone de préhension (52) affectée à la tenue en main dudit cruchon (1), sachant que l'élément (8) de blocage à demeure, réalisé sous la forme d'un couvre-poignée, peut être mis en place sur ladite zone de liaison (51) et être dissocié d'avec cette dernière.

3. Cruchon (1) selon la revendication 2,
**caractérisé par le fait**
**que** la zone de liaison (51) de la poignée (5) comporte un premier orifice (53), sensiblement aligné avec une cavité située dans la zone de préhension (52) ; et par le fait que l'élément (8) de blocage à demeure couvre, pour l'essentiel, l'intégralité dudit premier orifice (53).

4. Cruchon (1) selon au moins l'une des revendications 2 ou 3,
**caractérisé par le fait**
**que** l'élément (8) de blocage à demeure peut être clipsé de manière libérable sur la zone de liaison (51).

5. Cruchon (1) selon au moins l'une des revendications 1 à 4,
**caractérisé par le fait**
**que** le couvercle (6) inclut un adaptateur (61), ainsi qu'au moins une première partie insérable (71, 72, 73), ladite première partie insérable (71, 72, 73) du couvercle pouvant être introduite dans l'adaptateur (61) ou mise en place sur ledit adaptateur (61), pour la condition d'utilisation dudit cruchon (1), et mise en applique contre le fond (3) du cruchon lorsque ledit cruchon (1) est dans une condition de stockage.

6. Cruchon (1) selon la revendication 5,
**caractérisé par le fait**
**que** l'adaptateur (61) présente, en coupe transversale, une configuration sensiblement en U comprenant une première aile (611), une seconde aile (612) et une membrure (613) reliant ces ailes (611, 612), sachant que ledit adaptateur (61) est de réalisation substantiellement annulaire et ceinture une ouverture (614), ouverture (614) dans, ou sur laquelle la première partie insérable (71, 72, 73) du couvercle peut être introduite, ou mise en place, pour la condition d'utilisation dudit cruchon (1).

7. Cruchon (1) selon au moins l'une des revendications 5 ou 6,
**caractérisé par le fait**
**que** l'adaptateur (61) est muni d'une protubérance (10) sensiblement périphérique, pouvant être mise en place sur le bord (4) de la paroi (2).

8. Cruchon (1) selon au moins l'une des revendications 6 ou 7,
**caractérisé par le fait**
**que** la seconde aile (612) de l'adaptateur (61), pointant vers l'ouverture (614), est dotée d'un rebord (13) faisant saillie en direction de ladite ouverture (614) de l'adaptateur (61), en vue de la mise en place de la première partie insérable (71, 72, 73) du couvercle.

9. Cruchon (1) selon au moins l'une des revendications 6 à 8,
**caractérisé par le fait**
**que** la première aile (611), pointant à l'opposé de l'ouverture (614), est pourvue d'au moins un évidement (12).

10. Cruchon (1) selon au moins l'une des revendications 6 à 9,
**caractérisé par le fait**
**que** la première partie insérable (71, 72, 73) du couvercle comporte une région marginale périphérique (711, 721, 731) servant, en condition d'utilisation, de surface de contact dédiée à la première aile (611) de l'adaptateur (61).

11. Cruchon (1) selon la revendication 10,
**caractérisé par le fait**
**que** la région marginale périphérique (711, 721, 731) de la première partie insérable (71, 72, 73) du couvercle est munie d'au moins un bec encliquetable (732, 733, 734, 735), lequel bec encliquetable (732, 733, 734, 735) sert, en condition d'utilisation, au blocage à demeure libérable de ladite première partie insérable (71, 72, 73) du couvercle dans l'adaptateur (61).

12. Cruchon (1) selon au moins l'une des revendications 6 à 11,
**caractérisé par le fait**
**que** l'élément (8) de blocage à demeure chevauche au moins partiellement l'adaptateur (61), de préférence la protubérance périphérique (10) dudit adaptateur (61).

13. Cruchon (1) selon au moins l'une des revendications 10 à 12,
**caractérisé par le fait**
**qu'**une rainure périphérique (31), dans laquelle la région marginale (711, 721, 731) de la première partie insérable (71, 72, 73) du couvercle peut être introduite dans la condition de stockage dudit cruchon (1), est située sur un côté du fond (3) dudit cruchon qui pointe vers la région intérieure (9).

14. Cruchon (1) selon au moins l'une des revendications 10 à 13,
**caractérisé par le fait**
**que** la région marginale (711, 721, 731) de la première partie insérable (71, 72, 73) du couvercle comporte une languette (712, 722) dépassant vers le haut.

15. Cruchon (1) selon au moins l'une des revendications 5 à 14,
**caractérisé par le fait**
**que** ledit cruchon (1) est doté d'au moins une seconde partie insérable (71, 72, 73) de couvercle, les première et seconde parties insérables (71, 72, 73) du couvercle pouvant être introduites dans l'adaptateur (61) et, en variante, être mises en applique contre le fond (3) dudit cruchon en formant un empilement.
